# EUROPÄISCHE PATENTSCHRIFT

(11) **EP 1 126 262 B1**
(45) Veröffentlichungstag und Bekanntmachung des Hinweises auf die Patenterteilung: **28.09.2005**
(21) Anmeldenummer: 01100665.7
(22) Anmeldetag: 11.01.2001
(51) Int. Cl.: G01M 1/02

(54) **Vorrichtung zum Auswuchten von Fahrzeugrädern**
Device for balancing vehicle wheels
Dispositif d'équilibrage de roues de véhicule

(30) Priorität: 16.02.2000 DE 10006991; 14.03.2000 DE 10012356
(43) Veröffentlichungstag der Anmeldung: 22.08.2001
(73) Patentinhaber: Snap-on Equipment GmbH, 64319 Pfungstadt (DE)
(72) Erfinder: Rühl, Klaus, 63762 Wenigumstadt (DE); Ries, Andreas, 64289 Darmstadt (DE); Klett, Eberhard, 64289 Darmstadt (DE); Fornoff, Dieter, 64285 Darmstadt (DE)
(74) Vertreter: Nöth, Heinz

(56) Entgegenhaltungen:
- EP-A- 0 557 240
- EP-A- 0 767 364
- US-A- 5 311 777

## Beschreibung

Die Erfindung betrifft eine Vorrichtung zum Auswuchten von Fahrzeugrädern gemäß dem Oberbegriff des Anspruchs 1.

Eine derartige aus der DE-GM 16 96 373 bekannte Vorrichtung dient zum Ausgleich von Unwuchten an Fahrzeugrädern durch Anbringen von Ausgleichsgewichten. Dabei kann es sich beispielsweise um Räder von Motorrädern, Kraftwagen, Lastkraftwagen usw. handeln. Um den Unwuchtausgleich vornehmen zu können, wird das auszuwuchtende Fahrzeugrad auf der Hauptwelle der Vorrichtung aufgespannt. Anschließend wird das Fahrzeugrad in Drehung versetzt und wenigstens ein Anbringungsort für ein Ausgleichsgewicht an dem Fahrzeugrad bestimmt. Nach Anbringen des Ausgleichgewichts wird das neu ausgewuchtete Fahrzeugrad von der Vorrichtung abgenommen. Um Verschmutzungen der Werkstatt und eine Verletzung der Bedienperson während der Rotation der Hauptwelle und des auf ihr aufgespannten Fahrzeugrades zu vermeiden, besitzen derartige Vorrichtungen eine Schutzhaube. Bei der bekannten Vorrichtung besteht die Schutzhaube aus einem ortsfesten Schutzhaubenelement, welches mit dem Maschinenfundament fest verbunden ist, und aus einem beweglichen Schutzhaubenelement, das an einer kreisbogenförmigen Führung des ortsfesten Schutzhaubenelementes reversibel zwischen einer Betriebsstellung und einer Außerbetriebstellung bewegbar ist. Die kreisbogenförmige Führung wird von nutförmigen Falzen gebildet, in denen das bewegliche Schutzhaubenelement gleitend geführt wird.

Eine aus der EP 0 767 364 A1 bekannte Vorrichtung umfaßt ein ortsfestes Schutzhaubenelement, welches starr an dem Maschinenrahmen angebracht ist, sowie ein bewegliches Schutzhaubenelement, welches aus einer Außerbetriebsstellung, in der das Fahrzeugrad auf der Hauptwelle aufspannbar und von der Hauptwelle abnehmbar ist, in eine Betriebsstellung reversibel bewegbar ist. In der Betriebsstellung umfaßt das bewegliche Schutzhaubenelement zusammen mit dem ortsfesten Schutzhaubenelement das Fahrzeugrad entlang dessen Lauffläche um mehr als 180°. Das bewegliche Schutzhaubenelement ist gegenüber dem ortsfesten Schutzhaubenelement auf dessen von der Hauptwelle wegweisenden Seite angeordnet und mittels einer im wesentlichen parallel zur Hauptwelle verlaufenden, an dem Maschinenrahmen gelagerten Schwenkwelle in seine beiden Stellungen verschwenkbar. Durch die zusätzliche Schwenkwelle ist diese Lösung verhältnismäßig aufwendig sowohl hinsichtlich des eingesetzten Materials als auch hinsichtlich des Herstellung- und Montageaufwandes.

Ein weiteres Problem im Zusammenhang mit derartigen Vorrichtungen besteht darin, daß die Bedienperson beim Eindrehen des auszuwuchtenden Fahrzeugrades in die jeweilige Auswuchtposition eine Bedien- und Anzeigeeinheit im Auge behalten muß, die u.a. die Drehrichtung des Fahrzeugsrades zum Erreichen der Ausgleichposition anzeigt. Bei den bisher bekannten Vorrichtungen, beispielsweise in EP 767 364 A1, EP 557 240 B1 oder DE 85 17 924 U1, ist diese Bedien- und Anzeigeeinheit an dem Maschinenrahmen in der Weise angeordnet, daß eine Bedienperson beim Arbeiten am Fahrzeugrad ihren Kopf verdrehen muß. Dies ist aus ergonomischen Gründen ungünstig und kann daher zu einer fehlerhaften Bedienung der Vorrichtung führen.

Es ist Aufgabe der vorliegenden Erfindung, eine Vorrichtung der eingangs genannten Art zu schaffen, bei der eine ergonomisch günstige Bedienung gewährleistet ist.

Diese Aufgabe wird durch die Merkmale des Anspruchs 1 gelöst. In den sich daran anschließenden Ansprüchen finden sich vorteilhafte Ausgestaltungen.

Hierzu ist an dem Ende des ortsfesten Schutzhaubenelementes, welches in die Betriebsstellung des beweglichen Schutzhaubenelementes weist, die Bedien- und Anzeigeeinheit angeordnet. Die Bedien- und Anzeigeeinheit kann wenigstens einen Monitor sowie mindestens ein oder mehrere Bedienelemente umfassen.

In vorteilhafter Weise ist die Bedien- und Anzeigeneinheit in Blickrichtung der Bedienperson, d.h. radial zur Hauptwelle, unmittelbar an der Schutzhaube angeordnet. Die Bedien- und Anzeigeeinheit ist so am ortsfesten Schutzhaubenelements angeordnet, dass die Bewegung des beweglichen Schutzhaubenelements hierdurch nicht beeinträchtigt wird. Daher kann eine ergonomisch günstige Lösung für den Anbringungsort der Anzeige- und Bedieneinheit erzielt werden, die bei den bisher bekannten Vorrichtungen nicht erreichbar war.

Um eine sichere Bewegung des beweglichen Schutzhaubenelements und darüberhinaus einen kompakten Aufbau der gesamten Vorrichtung zu erzielen, ist es vorteilhaft, wenn das bewegliche Schutzhaubenelement an dem ortsfesten Schutzhaubenelement über eine Führungseinrichtung beweglich gehalten ist.

Diese Führungseinrichtung kann beliebig aufgebaut sein und den jeweiligen konkreten Lösungsbedürfnissen angepaßt sein. Eine besonders vorteilhafte Lösung wird dadurch erzielt, daß die Führungseinrichtung durch wenigstens eine an dem beweglichen Schutzhaubenelement angebrachte Führungsschiene und durch mindestens eine an dem ortsfesten Schutzhaubenelement angebrachte Führungsrolle gebildet ist, die in Kontakt bzw. Eingriff mit der Führungsschiene steht. Beispielsweise kann in diesem Fall die Führungsschiene in etwa in der Mitte des beweglichen Schutzhaubenelements angebracht sein und die Führungsrolle ebenfalls in der Mitte des ortsfesten Schutzhaubenelements vorgesehen sein. Die Führungsschiene kann dann in diesem Fall einen L-förmigen Querschnitt aufweisen, wobei die wenigstens eine Führungsrolle, insbesondere zwei Führungsrollen auf dem im wesentlichen horizontal verlaufenden Schenkel der L-förmigen Führungsschiene abrollt bzw. abrollen.

Grundsätzlich kann die Führungsrolle an einem beliebigen Bereich des ortsfesten Schutzhaubenelements angeordnet sein. Ein besonders kompakter und leicht zu wartender Aufbau der Schutzhaube läßt sich dadurch erzielen, daß die Führungsrolle an dem in Betriebsstellung des beweglichen Schutzhaubenelements weisenden Ende des ortsfesten Schutzhaubenelements angeordnet ist.

Wie oben bereits darauf hingewiesen worden ist, kann die Führungseinrichtung aus mindestens einer Führungsschiene und wenigstens einer Führungsrolle gebildet sein. Um eine sichere Führung und damit eine gute Bedienbarkeit gewährleisten zu können, ist es vorteilhaft, wenn die Führungseinrichtung zwei Führungsschienen, die jeweils an den in Bewegungsrichtung des beweglichen Schutzhaubenelements verlaufenden Randkanten dieses Schutzhaubenelements angebracht sind, und acht Führungsrollen enthält, von denen jeweils vier auf jeder der beiden in Bewegungsrichtung des beweglichen Schutzhaubenelements verlaufenden Randkanten des ortsfesten Schutzhaubenelements paarweise angeordnet sind. Um ein Verletzungsrisiko der Bedienperson zu vermeiden, kann im Bereich der Führungsrolle(n) eine Abdeckeinrichtung, beispielsweise in Form einer sich senkrecht zu dem Schutzhaubenelement erstreckenden Schiene oder eines ebensolchen Bleches vorgesehen sein.

Die Führungseinrichtung insbesondere die Führungsrollen der Führungseinrichtung können an der Innenseite wenigstens eines am oberen Ende des ortsfesten Schutzhaubenelementes vorgesehenen Schutzblechstreifen vorgesehen sein. Dieser Schutzblechstreifen umgreift die Bewegungsbahn des beweglichen Schutzhaubenelementes. Vorzugsweise sind an beiden Seiten der oberen Endbereiche des ortsfesten Schutzhaubenelementes Schutzblechstreifen mit den an den Innenseiten vorgesehenen Führungsrollen angeordnet.

Um die Endstellungen des beweglichen Schutzhaubenelementes, d.h. also die Außerbetriebsstellung bzw. die Betriebsstellung, sicher definieren zu können, kann weiterhin vorgesehen sein, daß die Bewegung des beweglichen Schutzhaubenelements von der Außerbetriebsstellung in die Betriebsstellung, und umgekehrt, durch Anschläge begrenzt ist.

Ist die erfindungsgemäße Vorrichtung mit wenigstens einer Gewichtsausgleichseinrichtung für das bewegliche Schutzhaubenelement versehen, so wird hierdurch die Handhabung für die Bedienperson erleichtert.

Um eine sichere Führung der Führungsrolle an der Führungsschiene zu erzielen, kann die Führungsrolle mit einem Führungsprofil, insbesondere einer Führungsnut versehen sein, mittels der sie in Eingriff mit der Führungsschiene steht. Sind mehrere Führungsrollen vorgesehen, so können darüber hinaus vorzugsweise sämtliche Führungsrollen an einer Randkante des ortsfesten Schutzhaubenelements mit Führungsnuten versehen sein.

Die Form der beiden Schutzhaubenelemente kann den jeweiligen Gegebenheiten angepaßt sein. Eine besonders günstige und raumsparende Form wird dadurch erzielt, daß die beiden Schutzhaubenelemente jeweils die Form eines Kreissegments oder eines Kreisbogens mit zumindest annähernd gleichen Krümmungsradien aufweisen.

Da insbesondere die Bedienperson durch die Schutzhaube geschützt werden soll und da weiterhin das bewegliche Schutzhaubenelement im Betrieb der Vorrichtung zu der Bedienperson weist, ist es für einen sicheren Schutz der Bedienperson weiterhin von Vorteil, wenn das bewegliche Schutzhaubenelement eine größere Breite, gemessen in etwa quer zu seiner Bewegungsrichtung, als das ortsfeste Schutzhaubenelement aufweist.

Um das bewegliche Schutzhaubenelement aus der Außerbetriebsstellung in die Betriebsstellung, und umgekehrt, durch die Bedienperson führen zu können, ist es weiterhin von Vorteil, wenn an dem in die Betriebsstellung weisenden Ende des beweglichen Schutzhaubenelements eine sich vorzugsweise quer zur Bewegungsrichtung erstreckende Griffstange angebracht ist.

Darüber hinaus kann an dem in die Betriebsstellung weisenden Ende des beweglichen Schutzhaubenelements eine Teleskopstange angelenkt sein, die mit ihrem anderen Ende an dem ortsfesten Schutzhaubenelement angelenkt ist. Die Anlenkung kann dabei so erfolgen, daß die Teleskopstange an dem ortsfesten Schutzhaubenelement in der Weise angebracht ist, daß sie sich bei in der Betriebsstellung befindlichen beweglichen Schutzhaubenelement im wesentlichen horizontal erstreckt.

Die ineinander laufenden Teleskopteile der Teleskopstange können durch Feder- und Dämpfungselemente beaufschlagt sein. Hierdurch erreicht man einen Gewichtsausgleich für das bewegliche Schutzhaubenelement. Ferner erreicht man das Abfangen von Bewegungsstößen, insbesondere in den jeweiligen Endlagen des Schutzhaubenelementes.

Die Teleskopstange kann jedoch auch Träger für Abstands- und Durchmessermesseinrichtungen in Form von berührungslos messenden Sensoren oder auch von Tasthebeln sein. Hierdurch lässt sich eine einfache Bestimmung des jeweiligen Rad- bzw. Felgentyps und die nachgeschaltete Einstellung der Mess- und Auswerteeinrichtung der Auswuchtmaschine erreichen.

Ferner kann die Teleskopstange bei geschlossener Schutzhaube, einen Schutz gegen Hineingreifen in das beim Messvorgang drehende Rad bieten. Hierzu kann gegebenenfalls eine Abdeckung im Bereich der Spannvorrichtung, mit welcher das auszuwuchtende Rad auf die Hauptwelle aufgespannt ist, vorgesehen sein.

Um das Aufspannen bzw. das Abnehmen des auszuwuchtenden Fahrzeugrades an der Hauptwelle zu erleichtern, kann weiterhin an dem Boden des Maschinenrahmens eine Rampe zum Auf- und Abrollen eines auszuwuchtenden Fahrzeugrades vorgesehen sein.

Weitere vorteilhafte Ausgestaltungen sowie ein Ausführungsbeispiel werden nachstehend anhand der beigefügten Zeichnungsfiguren erläutert. In diesem Zusammenhang ist darauf hinzuweisen, daß die in der nachstehenden Beschreibung verwendeten Begriffe "unten", "oben", "links" und "rechts" sich auf die Zeichnungsfiguren mit normal lesbarer Figurenbezeichnung beziehen. In den Zeichnungsfiguren ist:
- Fig. 1: eine schematische, perspektivische Ansicht einer erfindungsgemäßen Vorrichtung mit einem in Außenbetriebsstellung befindlichen, beweglichen Schutzhaubenelement;
- Fig. 2: eine schematische, perspektivische Ansicht von unten auf ein ortsfestes Schutzhaubenelement der in Fig. 1 gezeigten Vorrichtung mit daran angebrachten Führungsrollen;
- Fig. 3: die in Fig. 2 gezeigten Führungsrollen in Eingriff mit einer Führungsschiene,die an einem beweglichen Schutzhaubenelement der in Fig. 1 gezeigten Vorrichtung angebracht ist;
- Fig. 4: eine schematische, perspektivische Ansicht von unten auf das ortsfeste Schutzhaubenelement mit weiteren Führungsrollen, die auf der Seite des ortsfesten Schutzhaubenelements angeordnet sind, welche der in den Fig. 2 und 3 gezeigten Seite gegenüberliegt;
- Fig. 5: eine schematische, perspektivische Ansicht der in Fig. 4 gezeigten Führungsrollen in Eingriff mit einer an dem beweglichen Schutzhaubenelement angebrachten Führungsschiene;
- Fig. 6: die in Fig. 1 gezeigte Vorrichtung mit in Betriebsstellung befindlichem, beweglichem Schutzhaubenelement; und
- Fig. 7: eine Ansicht von vorne für ein Ausführungsbeispiel, bei dem die in den Figuren 2 und 4 gezeigten Führungsrollen verwendet werden.

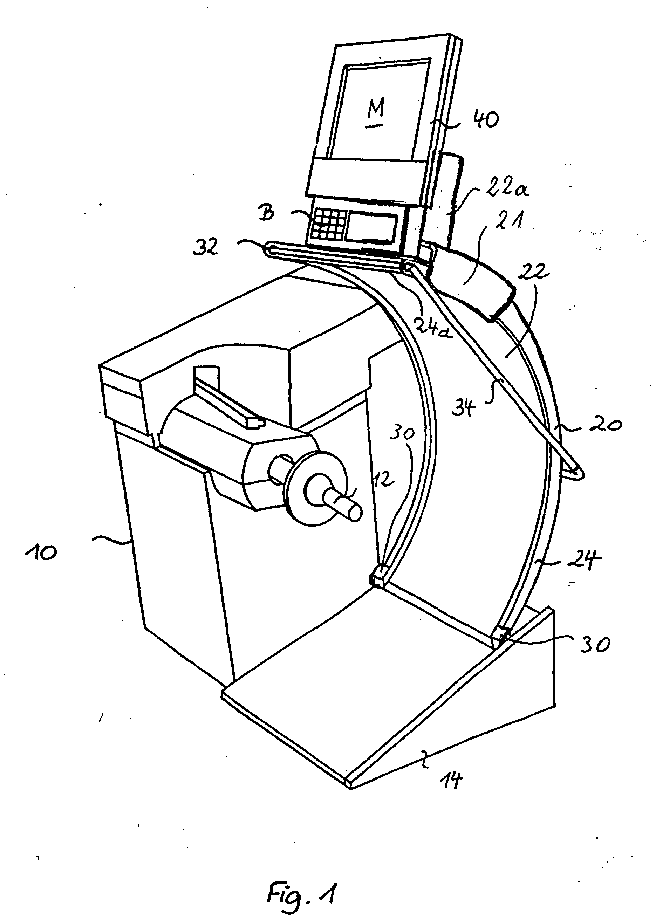

Die in Fig. 1 gezeigte Vorrichtung zum Auswuchten von Fahrzeugrädern gemäß der Erfindung umfaßt als Hauptbaugruppen einen Maschinenrahmen bzw. ein Maschinengestell 10, eine im wesentlichen horizontal verlaufende Hauptwelle 12 zum Aufspannen eines auszuwuchtenden, nicht weiter gezeigten Fahrzeugrades, eine am Boden des Maschinenrahmens 10 angeordnete Rampe 14, eine an den Maschinenrahmen 10 und/oder an der Rampe 14 angebrachte Schutzhaube 20 sowie eine Bedien- und Anzeigeeinheit 40.

Der Maschinenrahmen 10 nimmt u.a. den Antrieb für die Hauptwelle 12, die Energieversorgung für diesen Antrieb, die Messeinrichtung für die Unwuchtmessung sowie eine Steuereinrichtung auf. Diese Bestandteile sind im Inneren des quaderförmigen Maschinenrahmens 10 angeordnet und durch nicht weiter bezeichnete Verkleidungsbleche verkleidet.

Die Hauptwelle 12 erstreckt sich im wesentlichen horizontal von dem Maschinenrahmen 10 aus nach rechts. Sie umfaßt eine nicht weiter dargestellte Aufspanneinrichtung, mittels der ein auszuwuchtendes Fahrzeugrad auf der Hauptwelle 12 aufspannbar ist. Darüber hinaus ist die Hauptwelle 12 mit Messaufnehmern zum Erfassen der Unwucht und zum Bestimmen der Ausgleichpositionen versehen. Ebenfalls an der rechten Seite des Maschinenrahmens 10 unterhalb der Hauptwelle 12 ist die Rampe 14 vorgesehen, mittels der ein auszuwuchtendes Fahrzeugrad aufgerollt und dann nur noch ein kurzes Stück zu der Hauptwelle 12 angehoben bzw. von dieser abgesenkt werden muß. Die Rampe 14 ist an dem Maschinenrahmen 10 angebracht.

Die Schutzhaube 20 besteht aus einem ortsfesten Schutzhaubenelement 22 sowie einem beweglichen Schutzhaubenelement 24. Sowohl das ortsfeste Schutzhaubenelement 22 als auch das bewegliche Schutzhaubenelement 24 sind durch ein kreisbogenförmiges bzw. kreissegmentförmiges Blech gebildet, wobei beide Elemente 22, 24. einen in etwa gleichen Krümmungsradius aufweisen. Beide Schutzhaubenelemente 22, 24 erstrecken sich über einen Winkelbereich zwischen größer 90° und kleiner 180°. Selbstverständlich ist aber auch jeder andere Winkelbereich denkbar. Die beiden Schutzhaubenelemente 22, 24 erstrecken sich jeweils entlang der Lauffläche eines auszuwuchtenden Fahrzeugrades.

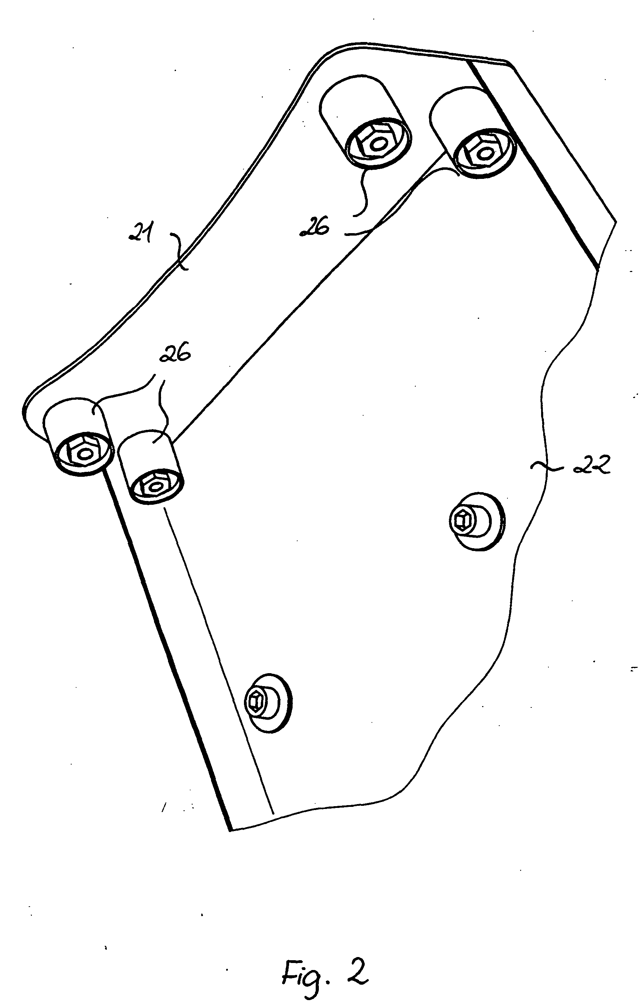

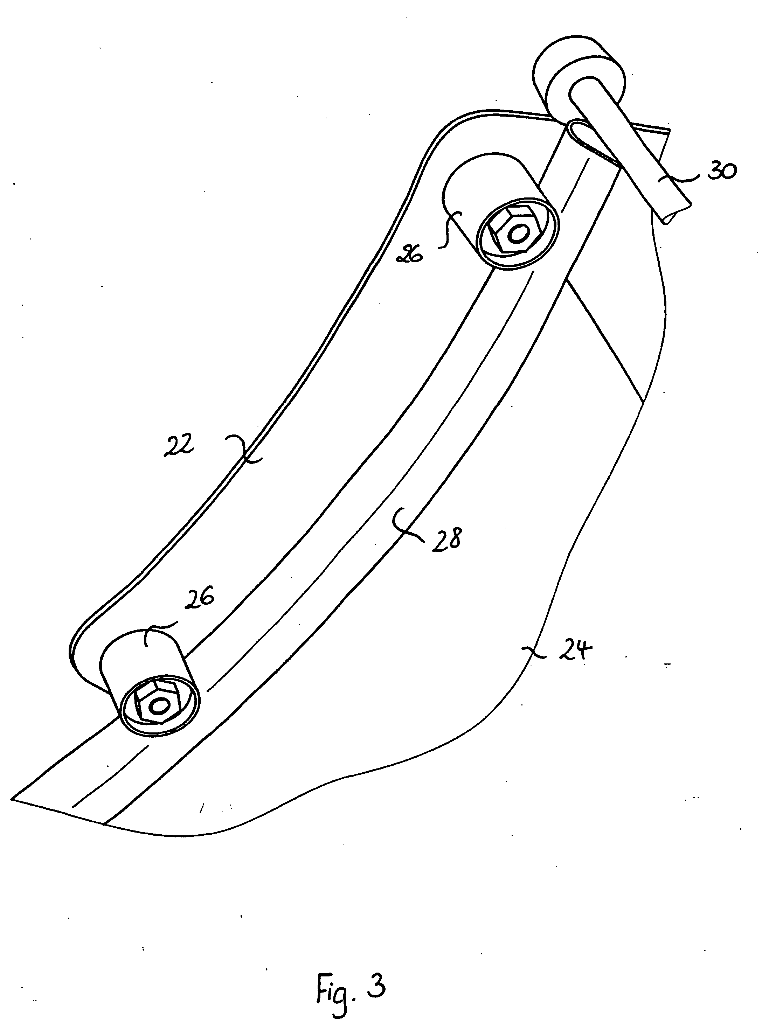

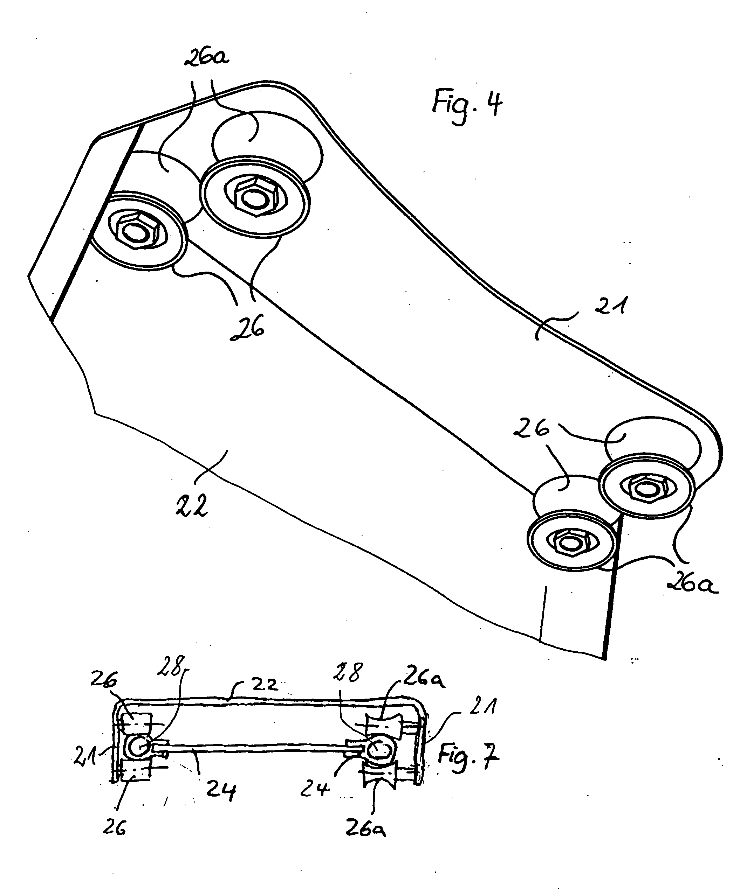

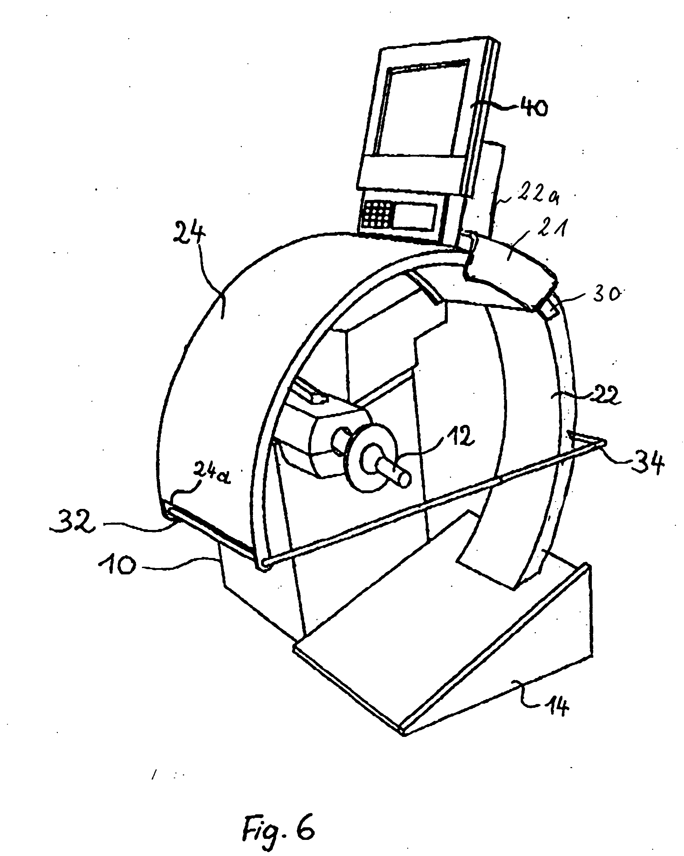

Das bewegliche Schutzhaubenelement 24 ist aus einer in Fig. 1 gezeigten Außerbetriebsstellung in eine in Fig. 6 gezeigte Betriebsstellung reversibel bewegbar. Hierzu ist eine Führungseinrichtung 26, 28 vorgesehen, die aus Führungsrollen 26 und Führungsschienen 28 besteht. Wie aus den Fig. 2 und 4 hervorgeht sind an dem ortsfesten Schutzhaubenelement 22 an den beiden parallel zu der Bewegungsrichtung des beweglichen Schutzhaubenelements 24 verlaufenden Randkanten jeweils paarweise vier Führungsrollen 26 angeordnet. In Fig. 2 sind von unten die vier paarweise angeordneten Führungsrollen 26 auf der linken Seite des ortsfesten Schutzhaubenelements 22 wiedergegeben, wogegen in Fig. 4 die vier paarweise angeordneten Führungsrollen 26 auf der rechten Seite des ortfesten Schutzhaubenelements 22 gezeigt sind. Die Achsen der Führungsrollen 26 erstrecken sich im wesentlichen horizontal und sind an der Innenseite eines Schutzblechstreifens 21 angebracht, welcher im wesentlichen senkrecht zu dem kreisbogenförmigen Schutzhaubenelement 22 verläuft und an das Schutzhaubenelement 22 durch Umbiegen angeformt sein kann. Der Schutzblechstreifen 21 umfaßt dabei das bewegliche Schutzhaubenelement 22. Die Schutzblechstreifen 21 können beidseitig an das ortsfeste Schutzhaubenelement 22 angeformt sein und dienen als Befestigungsstellen für die Führungseinrichtung.

Wie aus den Fig. 2 und 4 weiterhin hervorgeht, sind die vier Führungsrollen 26 an jedem umgebogenen Schutzblechstreifen 21 des ortsfesten Schutzhaubenelements 22 paarweise angeordnet in der Weise, daß jeweils eine nachstehend noch näher beschriebene Führungsschiene 28 zwischen ihnen aufgenommen werden kann. Wie in den Figuren 2 und 4 gezeigt ist, können die auf der rechten Seite des ortsfesten Schutzhaubenelements 22 vorgesehenen Führungsrollen 26 jeweils mit einem Führungsprofil, insbesondere einer Führungsnut 26a ausgestattet sein, wogegen die Führungsrollen 26 auf der linken Seite einen glatten zylindrischen Außenumfang aufweisen können. In der Figur 7 ist dargestellt, wie an den beiden Rändern des beweglichen Schutzhaubenelements 22 befestigte Führungsschienen 28 zwischen den jeweiligen Rollenpaaren 26 und 26a geführt sind.

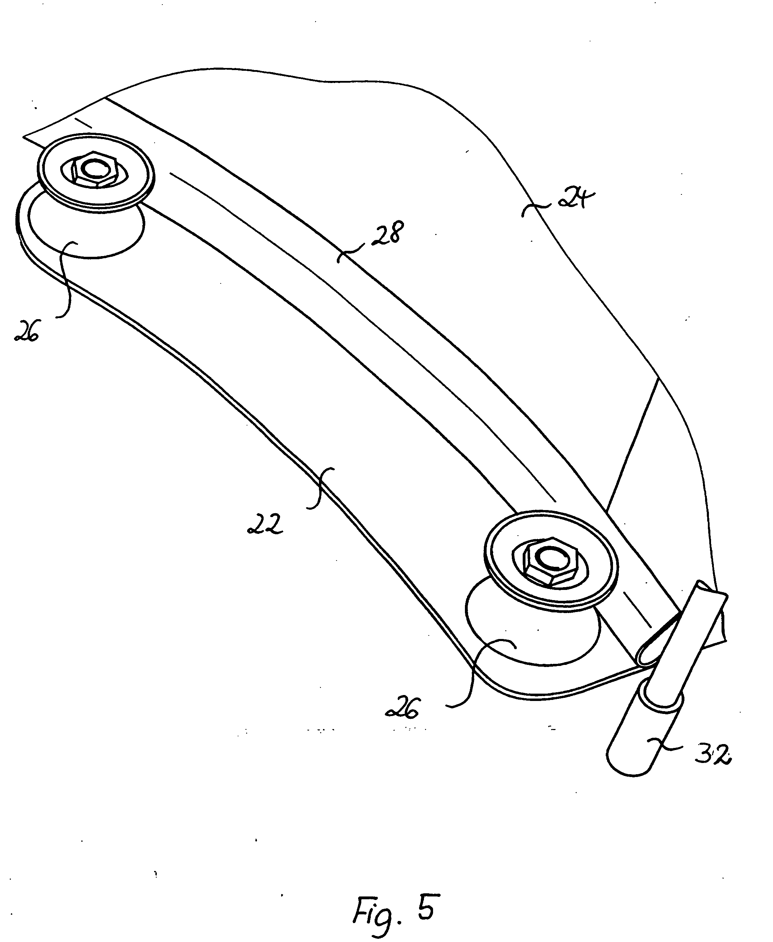

Bei dem in den Fig. 3 und 5 dargestellten Ausführungsbeispiel ist das bewegliche Schutzhaubenelement 24 an seiner Unterseite an den Rändern mit Führungsschienen 28 versehen. Diese Führungsschienen 28 werden zwischen den paarweise angeordneten Führungsrollen 26 des ortsfesten Schutzhaubenelements 22 aufgenommen. Die Führungsrollen 26 sind ebenfalls drehbar an den umgebogenen Schutzblechstreifen 21 befestigt.

Zur Begrenzung der Bewegung des beweglichen Schutzhaubenelements 24 in die Betriebsstellung bzw. in die Außerbetriebsstellung sind an den jeweiligen Endpunkten Anschläge 30 vorgesehen. Die Anschläge 30 sind an den beiden Enden des beweglichen Schutzhaubenelements 24 angeordnet. Die Anschläge 30 schlagen in der Endstellung bei geschlossener Haube (Fig. 6) am ortsfesten Schutzhaubenelement 22 an. Grundsätzlich können aber die Anschläge 30 an anderen Baugruppen bzw. Bauelementen der erfindungsgemäßen Vorrichtung angeordnet sein. Der Anschlag für das Erreichen der Außerbetriebsstellung kann auch durch die Rampe 14 gebildet sein.

Damit die Bedienperson das bewegliche Schutzhaubenelement 24 einfach handhaben kann, ist an dem in die Betriebsstellung weisenden Ende 24a des beweglichen Schutzhaubenelements 24 eine Griffstange 32 vorgesehen, die sich im wesentlichen über die gesamte Breite des beweglichen Schutzhaubenelements 24 erstreckt.

Weiterhin ist eine Teleskopstange 34 vorgesehen, die mit ihrem einen Ende an dem beweglichen Schutzhaubenelement 24 und mit ihrem anderen Ende an dem ortsfesten Schutzhaubenelement 22 angelenkt ist. Wie insbesondere aus der Fig. 6 entnehmbar ist, kann die Teleskopstange 34 mit ihrem einen Ende an der Griffstange 32 des beweglichen Schutzhaubenelements 24 angelenkt sein und mit ihrem anderen Ende an dem ortsfesten Schutzhaubenelement 22 in der Weise, daß sich die Teleskopstange 34 in der Betriebsstellung des beweglichen Schutzhaubenelements 24 im wesentlichen horizontal erstreckt. Für einen Gewichtsausgleich können die ineinander gesteckten teleskopierenden Teile der Teleskopstange 34 durch Federund/oder Dämpfungselemente beaufschlagt sein. Hierdurch wird nicht nur die Bedienung erleichtert, sondern es werden Bewegungsstöße des beweglichen Schutzhaubenelements 24 abgefangen.

Wie ebenfalls aus den Fig. 1 und 6 entnehmbar ist, ist an dem in die Betriebsstellung des beweglichen Schutzhaubenelements 24 weisenden Ende 22a des ortsfesten Schutzhaubenelements 22 gegebenenfalls an einer Befestigungskonsole die Bedien- und Anzeigeeinheit 40 vorgesehen. Wie aus Fig. 1 entnehmbar ist, umfaßt die Bedien- und Anzeigeeinheit 40 einen Monitor M sowie Bedienelemente B, die unterhalb der Monitors M angeordnet sind. Wie weiterhin aus Fig. 1 und 6 entnehmbar ist, erstreckt sich das ortsfeste Schutzhaubenelement 22 in der Weise über einen Winkelbereich von der Rampe 14, daß die Bedien- und Anzeigeeinheit 40 bei einem durchschnittlich großen Menschen im wesentlichen in dessen horizontale Blickrichtung weist. Um gegebenenfalls eine Anpassung der Bedien- und Anzeigeeinheit 40 auf die Blickrichtung einer Bedienperson ermöglichen zu können, kann die Bedien- und Anzeigeeinheit 40 an dem Ende 22a des ortsfesten Schutzhaubenelements 22 in der Weise angeordnet sein, daß sie um einen nicht weiter dargestellte horizontale und/oder vertikale Achse verschwenkt werden kann.

### [Bezugszeichenliste]

- 10: Maschinenrahmen
- 12: Hauptwelle
- 14: Rampe
- 20: Schutzhaube
- 21: Schutzblechstreifen
- 22: ortsfestes Schutzhaubenelement
- 24: bewegliches Schutzhaubenelement
- 26: Führungsrolle
- 28: Führungsschiene
- 30: Anschläge
- 32: Griffstange
- 34: Teleskop
- 40: Bedien- und Anzeigeeinheiten
- B: Bedienelemente
- M: Monitor

## Patentansprüche

1. Vorrichtung zum Auswuchten von Fahrzeugrädern, mit einem Maschinenrahmen (10), mit einer in dem Maschinenrahmen (10) drehbar gelagerten Hauptwelle (12), auf der ein auszuwuchtendes Fahrzeugrad aufspannbar ist, und mit einer das auszuwuchtende Fahrzeugrad zumindest teilweise übergreifenden Schutzhaube (20), die ein ortsfestes Schutzhaubenelement (22) und ein bewegliches Schutzhaubenelement (24) aufweist, welches aus einer Betriebsstellung reversibel in eine Außerbetriebsstellung bewegbar ist, **dadurch gekennzeichnet, dass** an dem Ende (22a) des ortsfesten Schutzhaubenelementes (22), welches in die Betriebsstellung des beweglichen Schutzhaubenelementes (24) weist, eine Bedien- und Anzeigeeinheit (40) befestigt ist.

2. Vorrichtung nach Anspruch 1, **dadurch gekennzeichnet, dass** die Bedien- und Anzeigeeinheit (40) einen Monitor (M) sowie Bedienelemente (B) umfasst.

3. Vorrichtung nach Anspruch 1 oder 2, **dadurch gekennzeichnet, dass** das bewegliche Schutzhaubenelement (24) auf der zu der Hauptwelle (12) weisenden Seite des ortsfesten Schutzhaubenelementes (22) aus der Außerbetriebsstellung reversibel in die Betriebsstellung bewegbar ist.

4. Vorrichtung nach einem der Ansprüche 1 bis 3, **dadurch gekennzeichnet, dass** das bewegliche Schutzhaubenelement (24) an dem ortsfesten Schutzhaubenelement (22) über eine Führungseinrichtung (26, 28) beweglich gehalten ist.

5. Vorrichtung nach Anspruch 4, **dadurch gekennzeichnet, dass** die Führungseinrichtung (26, 28) durch wenigstens eine an dem beweglichen Schutzhaubenelement (24) angebrachte Führungsschiene (28) und durch mindestens eine an dem ortsfesten Schutzhaubenelement (22) angebrachte Führungsrolle (26) gebildet ist, die in Eingriff mit der Führungsschiene (28) steht.

6. Vorrichtung nach Anspruch 5, **dadurch gekennzeichnet, dass** die wenigstens eine Führungsrolle (26) an dem in die Betriebsstellung des beweglichen Schutzhaubenelements (24) weisenden Ende (22a) des ortsfesten Schutzhaubenelements (22) angeordnet ist.

7. Vorrichtung nach Anspruch 5 oder 6,**dadurch gekennzeichnet, dass** die Führungseinrichtung (26, 28) zwei Führungsschienen (28), die jeweils an den in Bewegungsrichtung des beweglichen Schutzhaubenelements (24) verlaufenden Randkanten dieses Schutzhaubenelements (24) angebracht sind, und acht Führungsrollen (26) enthält, von denen jeweils vier auf jeder der beiden in Bewegungsrichtung des beweglichen Schutzhaubenelements (24) verlaufenden Randkanten des ortsfesten Schutzhaubenelements (22) paarweise angeordnet sind.

8. Vorrichtung nach einem der Ansprüche 1 bis 7, **dadurch gekennzeichnet, dass** die Führungsrolle (26) mit einem Führungsprofil (26a), insbesondere einer Führungsnut, versehen ist, mittels der sie in Eingriff mit der Führungsschiene (28) steht.

9. Vorrichtung nach einem der Ansprüche 5 bis 8, **dadurch gekennzeichnet, dass** die wenigstens eine Führungsrolle (26, 26a) an wenigstens einem die Bewegungsbahn an den Rändern des beweglichen Schutzhaubenelements (24) umgebenden Schutzblechstreifen (21) des ortsfesten Schutzhaubenelements (22) angeordnet sind.

10. Vorrichtung nach einem der Ansprüche 5 bis 9, **dadurch gekennzeichnet, dass** an einer Randkante des ortsfesten Schutzhaubenelements (22) Führungsrollen (26) mit Führungsnuten (26a) vorgesehen sind.

11. Vorrichtung nach einem der Ansprüche 1 bis 10, **dadurch gekennzeichnet, dass** die Bewegung des beweglichen Schutzhaubenelements (24) von der Außerbetriebsstellung in die Betriebsstellung, und umgekehrt, durch Anschläge (30) begrenzt ist.

12. Vorrichtung nach einem der Ansprüche 1 bis 11, **dadurch gekennzeichnet, dass** beide Schutzhaubenelemente (22, 24) jeweils die Form eines Kreissegments mit zumindest annährend gleichen Krümmungsradien aufweisen.

13. Vorrichtung nach einem der Ansprüche 1 bis 12, **dadurch gekennzeichnet, dass** das bewegliche Schutzhaubenelement (24) eine geringere Breite, gemessen in etwa quer zu seiner Bewegungsrichtung, als das ortsfeste Schutzhaubenelement (22) aufweist.

14. Vorrichtung nach einem der Ansprüche 1 bis 13, **dadurch gekennzeichnet, dass** an dem in die Betriebsstellung weisenden Ende (24a) des bewegliche Schutzhaubenelements (24) eine sich vorzugsweise quer zur Bewegungsrichtung erstreckende Griffstange (32) angebracht ist.

15. Vorrichtung nach einem der Ansprüche 1 bis 14, **dadurch gekennzeichnet, dass** wenigstens eine Gewichtsausgleichseinrichtung für das bewegliche Schutzhaubenelement (24) vorgesehen ist.

16. Vorrichtung nach einem der Ansprüche 1 bis 15, **dadurch gekennzeichnet, dass** an dem in die Betriebsstellung weisenden Ende (24a) des bewegliche Schutzhaubenelements (24) eine Teleskopstange (34) angelenkt ist, die mit ihrem anderen Ende an dem ortsfesten Schutzhaubenelement (22) angelenkt ist.

17. Vorrichtung nach Anspruch 16, **dadurch gekennzeichnet, dass** die Teleskopstange (34) an dem ortsfesten Schutzhaubenelement (22) in der Weise angelenkt ist, dass sie sich bei in der Betriebsstellung befindlichem beweglichen Schutzhaubenelement (24) im wesentlichen horizontal erstreckt.

18. Vorrichtung nach einem der Ansprüche 1 bis 17, **dadurch gekennzeichnet, dass** an dem Boden des Maschinenrahmens (10) eine Rampe (14) zum Auf- und Abrollen eines auszuwuchtenden Fahrzeugrades vorgesehen ist.

## Claims

1. Apparatus for balancing vehicle wheels, comprising a machine frame (10), a main shaft (12) which is mounted rotatably in the machine frame (10) and on which a vehicle wheel to be balanced can be clamped, and a guard hood (20) which at least partially engages over the vehicle wheel to be balanced and which has a stationary guard hood element (22) and a movable guard hood element (24) which is movable reversibly from an operative position into an inoperative position, **characterised in that** an operating and display unit (40) is fixed at the end (22a) of the stationary guard hood element (22) which faces into the operative position of the movable guard hood element (24).

2. Apparatus according to claim 1 **characterised in that** the operating and display unit (40) includes a monitor (M) and operating elements (B).

3. Apparatus according to claim 1 or claim 2 **characterised in that** the movable guard hood element (24) is movable reversibly from the inoperative position into the operative position on the side of the stationary guard hood element (22), which faces towards the main shaft (12).

4. Apparatus according to one of claims 1 to 3 **characterised in that** the movable guard hood element (24) is held movably to the stationary guard hood element (22) by way of a guide means (26, 28).

5. Apparatus according to claim 4 **characterised in that** the guide means (26, 28) is formed by at least one guide rail (28) mounted to the movable guard hood element (24) and at least one guide roller (26) which is mounted to the stationary guard hood element (22) and which is in engagement with the guide rail (28).

6. Apparatus according to claim 5 **characterised in that** the at least one guide roller (26) is arranged at the end (22a) of the stationary guard hood element (22), which end faces into the operative position of the movable guard hood element (24).

7. Apparatus according to claim 5 or claim 6 **characterised in that** the guide means (26, 28) has two guide rails (28) which are respectively mounted to the edges of the movable guard hood element (4), which edges extend in the direction of movement of the movable guard hood element (24), and the guide means (26, 28) further includes eight guide rollers (26) of which four are respectively arranged in pairs on each of the two edges of the stationary guard hood element (22), which edges extend in the direction of movement of the movable guard hood element (24).

8. Apparatus according to one of claims 1 to 7 **characterised in that** the guide roller (26) is provided with a guide profile (26a), in particular a guide groove, by means of which it is in engagement with the guide rail (28).

9. Apparatus according to one of claims 5 to 8 **characterised in that** the at least one guide roller (26, 28) is arranged on at least one sheet metal guard strip (21) of the stationary guard hood element (22), said guard strip surrounding the path of movement at the edges of the movable guard hood element (24).

10. Apparatus according to one of claims 5 to 9 **characterised in that** guide rollers (26) with guide grooves (26a) are provided at an edge of the stationary guard hood element (22).

11. Apparatus according to one of claims 1 to 10 **characterised in that** the movement of the movable guard hood element (24) from the inoperative position into the operative position and vice-versa is limited by abutments (30).

12. Apparatus according to one of claims 1 to 11 **characterised in that** both guard hood elements (22, 24) are each in the form of a segment of a circle with at least approximately equal radii of curvature.

13. Apparatus according to one of claims 1 to 12 **characterised in that** the movable guard hood element (24) is of a smaller width, measured approximately transversely with respect to its direction of movement, than the stationary guard hood element (22).

14. Apparatus according to one of claims 1 to 13 **characterised in that** a gripping bar (32) which preferably extends transversely with respect to the direction of movement is provided at the end (24a) of the movable guard hood element (24), which end faces towards the operative position.

15. Apparatus according to one of claims 1 to 14 **characterised in that** there is provided at least one weight-compensating means for the movable guard hood element (24).

16. Apparatus according to one of claims 1 to 15 **characterised in that** a telescopic bar (34) is pivoted to the end (24a) of the movable guard hood element (24), which faces towards the operative position, while the other end of the telescopic bar is pivoted to the stationary guard hood element (22).

17. Apparatus according to claim 16 **characterised in that** the telescopic bar (34) is pivoted to the stationary guard hood element (22) in such a way that it extends substantially horizontally when the movable guard hood element (24) is in the operative position.

18. Apparatus according to one of claims 1 to 17 **characterised in that** a ramp (14) for rolling a vehicle wheel up and down thereon is provided at the bottom of the machine frame (10).

## Revendications

1. Dispositif d'équilibrage de roues de véhicule, comportant un bâti (10) de machine, comportant un arbre (12) principal monté à rotation dans le bâti (10) de machine et sur lequel une roue de véhicule à équilibrer peut être serrée, et comportant un capot (20) de protection recouvrant au moins partiellement la roue de véhicule à équilibrer, capot qui comprend un élément (22) fixe de capot de protection et un élément (24) mobile de capot de protection, qui peut être déplacé de manière réversible d'une position de service dans une position hors service, **caractérisé en ce qu'**une unité (40) de commande et d'affichage est fixée à l'extrémité (22a) de l'élément (22) fixe de capot de protection qui fait face dans la position de service de l'élément (24) mobile de capot de protection.

2. Dispositif suivant la revendication 1, **caractérisé en ce que** l'unité (40) de commande et d'affichage comprend un écran (M) de contrôle ainsi que des éléments (B) de commande.

3. Dispositif suivant la revendication 1 ou 2, **caractérisé en ce que** l'élément (24) mobile de capot de protection est mobile de manière réversible de la position hors service dans la position de service sur le côté de l'élément (22) fixe de capot de protection qui est tourné vers l'arbre (12) principal.

4. Dispositif suivant l'une des revendications 1 à 3, **caractérisé en ce que** l'élément (24) mobile de capot de protection est maintenu à déplacement sur l'élément (22) fixe de capot de protection au moyen d'un équipement (26, 28) de guidage.

5. Dispositif suivant la revendication 4, **caractérisé en ce que** l'équipement (26, 28) de guidage est formé par au moins un rail (28) de guidage installé sur l'élément (24) mobile de capot de protection et par au moins un galet (26) de guidage installé sur l'élément (22) fixe de capot de protection, galet qui est en prise avec le rail (28) de guidage.

6. Dispositif suivant la revendication 5, **caractérisé en ce que** le galet (26) de guidage au moins unique est disposé à l'extrémité (22a) de l'élément (22) fixe de capot de protection qui fait face dans la position de service de l'élément (24) mobile de capot de protection.

7. Dispositif suivant la revendication 5 ou 6, **caractérisé en ce que** l'équipement (26, 28) de guidage comprend deux rails (28) de guidage, qui sont respectivement installés sur les arêtes de bords de l'élément (24) mobile de capot de protection qui s'étendent dans la direction de déplacement de cet élément (24) de capot de protection, et huit galets (26) de guidage qui sont disposés par paires respectives de quatre galets sur chacune des deux arêtes de bords de l'élément (22) fixe de capot de protection qui s'étendent dans la direction de déplacement de l'élément (24) mobile de capot de protection.

8. Dispositif suivant l'une des revendications 1 à 7, **caractérisé en ce que** le galet (26) de guidage est pourvu d'un profil (26a) de guidage, notamment d'une rainure de guidage, au moyen de laquelle il est en prise avec le rail (28) de guidage.

9. Dispositif suivant l'une des revendications 5 à 8, **caractérisé en ce que** le galet (26, 26a) de guidage au moins unique est disposé sur au moins une bande (21) de tôle de protection de l'élément (22) fixe de capot de protection qui entoure la trajectoire de déplacement sur les bords de l'élément (24) mobile de capot de protection.

10. Dispositif suivant l'une des revendications 5 à 9, **caractérisé en ce que** des galets (26) de guidage pourvus de rainures (26a) de guidage sont prévus sur une arête de bord de l'élément (22) fixe de capot de protection.

11. Dispositif suivant l'une des revendications 1 à 10, **caractérisé en ce que** le déplacement de l'élément (24) mobile de capot de protection de la position hors service dans la position de service, et vice-versa, est limité par des butées (30).

12. Dispositif suivant l'une des revendications 1 à 11, **caractérisé en ce que** les deux éléments (22, 24) de capot de protection possèdent chacun la forme d'un segment de cercle avec des rayons de courbure au moins approximativement identiques.

13. Dispositif suivant l'une des revendications 1 à 12, **caractérisé en ce que** l'élément (24) mobile de capot de protection possède une plus petite largeur, mesurée environ transversalement à sa direction de déplacement, que l'élément (22) fixe de capot de protection.

14. Dispositif suivant l'une des revendications 1 à 13, **caractérisé en ce qu'**une barre (22) de préhension, s'étendant de préférence transversalement à la direction de déplacement, est installée à l'extrémité (24a) de l'élément (24) mobile de capot de protection qui fait face dans la position de service.

15. Dispositif suivant l'une des revendications 1 à 14, **caractérisé en ce qu'**au moins un équipement de compensation de poids est prévu pour l'élément (24) mobile de capot de protection.

16. Dispositif suivant l'une des revendications 1 à 15, **caractérisé en ce qu'**une barre (34) télescopique est articulée à l'extrémité (24a) de l'élément (24) mobile de capot de protection qui fait face dans la position de service, barre qui est articulée par son autre extrémité sur l'élément (22) fixe de capot de protection.

17. Dispositif suivant la revendication 16, **caractérisé en ce que** la barre (34) télescopique est articulée sur l'élément (22) fixe de capot de protection de telle sorte qu'elle s'étend essentiellement horizontalement lorsque l'élément (24) mobile de capot de protection se trouve dans la position de service.

18. Dispositif suivant l'une des revendications 1 à 17, **caractérisé en ce qu'**une rampe (14) est prévue sur le fond du bâti (10) de machine pour charger et décharger, en la faisant rouler, une roue de véhicule à équilibrer.
